# EUROPÄISCHE PATENTSCHRIFT

(11) **EP 2 927 776 B1**
(45) Veröffentlichungstag und Bekanntmachung des Hinweises auf die Patenterteilung: **14.11.2018**
(21) Anmeldenummer: 15000465.3
(22) Anmeldetag: 17.02.2015
(51) Int. Cl.: G05G 1/44, G01L 5/22

(54) **Fußpedal**
Foot pedal
Pédale à pied

(30) Priorität: 02.04.2014 DE 202014101559 U
(43) Veröffentlichungstag der Anmeldung: 07.10.2015
(73) Patentinhaber: Fernsteuergeräte Kurt Oelsch GmbH, 12347 Berlin (DE)
(72) Erfinder: Nicolai, Christoph, 10715 Berlin (DE)
(74) Vertreter: Willems, Volker

(56) Entgegenhaltungen:
- EP-A1- 1 936 470
- WO-A1-2013/086602
- DE-A1-102006 007 664
- DE-T2- 60 117 193
- IT-A1- BO20 100 302
- US-A1- 2004 237 700
- US-A1- 2011 036 192
- US-A1- 2011 282 545
- US-A1- 2013 080 029

## Beschreibung

### Technisches Gebiet

1. Die Erfindung betrifft ein Fußpedal zur Betätigung einer Maschine, enthaltend
   a) eine Montagevorrichtung, in welcher das Fußpedal um eine Schwenkachse schwenkbar vorgesehen ist,
   b) einen Rückstellmechanismus, welcher das Fußpedal nach Betätigung in eine Ausgangsstellung zurückführt,
   c) einen Stellungsgeber, welcher die Stellung des Fußpedals erfasst und die Maschine entsprechend der Stellung des Fußpedals ansteuert und
   d) einen druckempfindlichen Sensor (38) zur Erfassung eines Fußes auf dem Fußpedal (10) unabhängig von der jeweiligen Stellung des Fußpedals (10), wobei
   e) der druckempfindliche Sensor (38) von einem druckempfindlichen Widerstandselement (38) oder von einem piezoelektrischem Element gebildet wird.

### Stand der Technik

Solche Fußpedale werden häufig bei Arbeitsmaschinen bzw. Nutzfahrzeugen, wie z.B. Kranwagen, Baufahrzeugen, wie Bagger und Radlader, oder landwirtschaftlichen Nutzfahrzeugen, wie Traktoren, verwendet. Sie werden dabei beispielsweise als Gaspedale zur Steuerung des Antriebs eingesetzt. Je nach Stellung des Gaspedals reagiert der Motor einer solchen Maschine. Das Fahrzeug beschleunigt, bremst ab oder hält beispielsweise seine Geschwindigkeit. Die Drehzahl einer Maschine lässt sich hierdurch entweder elektronisch oder auch mechanisch ansteuern und variieren.

Aus der Druckschrift DE 20 2009 0004 25 U1 ist eine Fahrpedalvorrichtung bekannt. Die Fahrpedalvorrichtung weist wenigstens ein Pedalhebelelement auf, das in wenigstens einer Pedaldrehachse verstellbar ist. Ein Pedalflächenelement ist dabei am Pedalhebelelement angeordnet.

Die Druckschrift DE 60 2005 002 867 T2 beschreibt Fahrzeuge, welche gewöhnlich beispielsweise für den Kraftantrieb von landwirtschaftlichen Geräten verwendet werden, die im typischen Fall vom Motor des Fahrzeugs angetrieben werden. Das Fahrzeug kann eine Zapfwelle aufweisen, die vom Motorausgangselement angetrieben wird, so dass ein festes Verhältnis der Umdrehungsgeschwindigkeit der Zapfwelle zur Umdrehungsgeschwindigkeit des Motorausgangselements besteht, wobei die Zapfwelle das landwirtschaftliche oder sonstige Gerät antreibt. Eine Zapfwelle kann aber durch ein Getriebe angetrieben werden, welches das Verändern des festen Verhältnisses durch Auswählen eines gewünschten Getriebezugs entsprechend verschiedener anzutreibender Geräte zulässt. Von einer Zapfwelle angetriebene landwirtschaftliche Geräte, wie nur zum Beispiel ein Mähwerk, sind meist für das Antreiben mit einer Soll-Umdrehungsgeschwindigkeit für optimale Leistung ausgelegt; andere landwirtschaftliche Geräte, wie zum Beispiel ein Pflug, können erfordern, dass das Fahrzeug für optimale Leistung mit einer gewünschten Geschwindigkeit über den Boden gefahren wird.

Es werden Steuersysteme für solche Fahrzeuge beschrieben, die ein Bedienelement wie z. B. eine Fußpedalsteuerung aufweisen und gewöhnlich auch ein Handsteuerelement, welche(s) die Aufgabe hat/haben, die Motordrehzahl zu verändern. Das Handsteuerelement wird gewöhnlich zum Einstellen der Motordrehzahl entsprechend dem über Zapfwelle angetriebenen Gerät verwendet und nach dem Einstellen kann das Steuersystem zum Halten der Motordrehzahl vorrangig vor der Fahrzeuggeschwindigkeit, welche durch Wählen eines Übersetzungsverhältnisses gewählt werden kann, z.B. mithilfe eines Steuerhebels (Joystick), programmiert sein. Bei derartigem Gebrauch wird die Pedalsteuerung meist nicht benutzt, da ihre Betätigung die Motordrehzahl variiert, was unerwünscht ist, da dies die Zapfwellen-Umdrehungsgeschwindigkeit beeinflusst. Wenn aber z. B. während des Mähens eine sich ändernde Belastung angetroffen wird, kann es sein, dass die Bedienungsperson eingreifen muss. Das Fußpedal kann niedergedrückt werden, um den Eingang an die Steuerung bereitzustellen, der entweder für eine alternative Fahrzeuggeschwindigkeit, die höher als die gewünschte Fahrzeuggeschwindigkeit ist, oder für eine alternative Motordrehzahl, die höher als die gewünschte Motordrehzahl ist, bezeichnend ist, und das Pedal kann eine Pedalrückstellvorrichtung aufweisen, um, wenn es losgelassen wird, das Pedal in seine Ausgangsposition zurückzubewegen, in welcher die Steuerung Ausgangssignale an das veränderbare Getriebe bereitstellen kann, um die Fahrzeuggeschwindigkeit auf die ursprünglich angezeigte gewünschte Fahrzeuggeschwindigkeit zurückzubringen, oder an eine Motordrehzahlsteuerung, um die Motordrehzahl auf die ursprünglich angezeigte gewünschte Motordrehzahl zurückzubringen, in Abhängigkeit von der ausgewählten Betriebsart.

Die DE 11 2011105173 T5 offenbart eine Steuervorrichtung für eine Fahrzeugantriebsvorrichtung. In der Druckschrift wird beschrieben, dass ein Fahrzeugstartbestimmungsmittel sequentiell bestimmt, ob eine Startbetätigung des Fahrzeugs im gestoppten Zustand ausgeführt wird, während das Fahrzeug gestoppt Ist. Insbesondere bestimmt, nachdem das Stoppbestlmrnungsmittel bestimmt hat, dass das Fahrzeug angehalten werden soll, das Fahrzeugstartbestimmungsmittel basierend auf dem Signal vom Gaspedalöffnungsgradsensor, ob das Gaspedal niedergedrückt ist. Falls beispielsweise der Gaspedalöffnungsgrad einen Fahrzeugstartbestimmungswert übersteigt, der vorab empirisch bestimmt wurde, um mit Sicherheit das Niederdrücken des Gaspedals unter Ausschluss eines Erfassungsfehlers des Gaspedalöffnungsgrads zu bestimmen, bestimmt das Fahrzeugstartbestimmungsmittel, dass das Gaspedal niedergedrückt wurde. Falls bestimmt wird, dass das Gaspedal niedergedrückt wird, bestimmt das Fahrzeugstartbestimmungsmittel, dass der Startbetrieb des Fahrzeugs durchgeführt wird.

Die WO 2013/086602 A1 offenbart einen fußbetätigten Regler zum Steuern von Maschinen, welcher einen Sensor aufweist, der auf Grundlage des Hall-Effekts arbeitet.

Die DE 601 17 193 T2 beschreibt eine Pedalvorrichtung zum Steuern des Gaspedals und Bremsen eines Kraftfahrzeugs. Die Pedalvorrichtung umfasst mehrere Bereiche mit Drucksensoren.

Aus der DE 10 2006 007 664 A1, der als nächstliegender Stand der Technik angesehen wird, ist ein elektrisches Fahrpedalsystem für ein Kraftfahrzeug bekannt, umfassend ein schwenkbar gelagertes Fahrpedal, eine Logikeinheit, über welche in Abhängigkeit von dem Auslenkungsweg des Fahrpedals ein Steuersignal erzeugt wird, und Erfassungsmittel zur Ermittlung eines aufgrund der Betätigung des Fahrpedals tatsächlich vorliegenden Krafteinleitungspunktes, Die Logikeinheit ist dabei derart ausgebildet, dass das Steuersignal zusätzlich in Abhängigkeit von dem ermittelten Krafteinleitungspunkt erzeugt wird.

Aus der US 2013/0080029 A1 ist ein System mit einem ein Pedalübersteuermodul bekannt. Das Pedalübersteuermoduf empfängt einerseits eine Pedalposition von einem Gaspedalpositionssensor und andererseits einen Pedaldruck von einem Gaspedaldrucksensor. Die Pedalposition wird mit dem Pedaldruck verglichen. Selektiv wird dann ein Pedalübersteuersignal auf der Grundlage des Vergleichs zwischen der Pedalposition und dem Pedaldruck von dem Pedalübersteuermodul ausgegeben. Ein Drosselklappenpositionssteuermodul steuert eine Position einer Drosselklappe auf der Grundlage der Pedalposition und des Pedalübersteuersignals.

Die US 2011/0282545 A1 beschreibt ein Pedalsystem für ein Fahrzeug. Das Pedalsystem umfasst ein Gaspedal, einen Sensor, eine Sensordetektionsschaltung und einen Controller. Das Pedal weist eine Fußauflage auf, und das Pedal bewegt sich in Reaktion auf die Betätigung des Fußpedals durch den Benutzer. Der Sensor, der mit der Fußauflage gekoppelt oder in diese integriert ist, weist einen ersten Zustand auf, wenn die Fußauflage betätigt ist, und weist einen zweiten Zustand auf, wenn die Fußauflage nicht betätigt ist. Der Sensor ist von jeglichen physischen Stellungssensoren des Pedals unabhängig und unterscheidet sich von diesen. Die Detektionsschaltung, die elektrisch mit dem Sensor gekoppelt ist, ist in der Lage, zwischen dem ersten Zustand und dem zweiten Zustand zu unterscheiden. Der Controller, der mit der Sensordetektionsschaltung gekoppelt ist, steuert den Betrieb des Fahrzeugs in einer Welse, die von dem ersten Zustand oder dem zweiten Zustand beeinflusst wird.

Die IT BO20 100 302 A1 offenbart ein Gaspedal, dessen jeweilige Position durch einen Positionssensor erfasst wird. Außerdem ist der Positionssensor mit einem Sicherheitssensor gekoppelt, der unabhängig von dem Positionssensor ist. Das Gaspedal reagiert erst bei einem vorbestimmten Sicherheitswert des Sicherheitssensors. Die Position des Gaspedals, welche durch den Positionssensor erfasst wird, muss durch die Wechselwirkung zwischen dem Fuß des Fahrers und dem Gaspedal bestätigt werden, was durch den Sicherheitssensor erfolgt. Bei Verschmutzung kann der Positionssensor jedoch Fehler liefern, was durch den Sicherheitssensor nicht erfasst und kompensiert werden kann.

Die bekannten Fußpedale, insbesondere solche, wie sie oben beschrieben wurden, haben den Nachteil, dass sie auch dann noch betätigbar sind, wenn überhaupt kein Fuß auf dem Pedal auffliegt. Dies ist ein Sicherheitsaspekt der sich besonders in der Baubranche bzw. der Landwirtschaft bemerkbar macht. Denn in diesen Einsatzfeldern haben die Nutzer mit Lehm verschmutztes Schuhwerk, welches sich beispielsweise beim Betätigen eines Gaspedals lösen kann. Wird der Fuß von dem Gaspedal entfernt, so kann es passieren, dass das Gaspedal weiterhin betätigt wird. Dies kann zu lebensbedrohlichen Situationen führen, wenn beispielsweise ein Fahrzeug weiterfährt obwohl das Gaspedal gar nicht mehr gewollt betätigt wird.

### Offenbarung der Erfindung

Aufgabe der Erfindung ist es daher, ein Fußpedal für Maschinen zu schaffen, welches die Nachteile des Standes der Technik vermeidet und beispielsweise auch bei Verschmutzungsresten vom Schuhwerk, wie Lehmklumpen, einwandfrei funktioniert und nicht versehentlich von alleine, d.h. ohne Bedienperson, betätigt wird.

Erfindungsgemäß wird die Aufgabe dadurch gelöst, dass bei einem Fußpedal zur Betätigung einer Maschine der eingangs genannten Art
f) der Stellungsgeber einen Magneten am Fußpedal und eine Hall-Sonde enthält, wobei der Magnet durch Betätigung des Fußpedals auf die Hall-Sonde zur Erfassung der Stellung des Fußpedals wirkt, wobei
g) ein Messwertaufnehmer die Signale des druckempfindlichen Sensors erfasst und bei einem geeigneten Schwellwert den Stellungsgeber beeinflusst, indem bei Nichterreichen des Schwellwerts der Stellungsgeber kein Signal an die Maschine gibt.

Die Erfindung beruht auf dem Prinzip, dass druckempfindliche Sensoren an dem Fußpedal vorgesehen sind, welche das Vorhandensein eines Fußes auf dem Fußpedal erfasst. Nur in dem Fall, wenn ein Fuß auf dem Fußpedal detektiert wird, kann das Fußpedal auch betätigt werden.

Gerade im landwirtschaftlichen Bereich oder auch in der Baubranche werden Fußpedale besonders beansprucht. Denn dort wird oft viel Dreck und Lehm mit in die Führerzelle von Maschinen getragen. Offen liegende Sensoren würden dabei unter einer erheblichen Abnutzung leiden. Als vorteilhafte Ausgestaltung der Erfindung hat sich daher erwiesen, wenn das erfindungsgemäße Fußpedal zur Betätigung einer Maschine eine Trägerschicht und eine Pedalschicht aufweist, zwischen denen der druckempfindliche Sensor angeordnet ist. Die Trägerschicht dient dazu, die Pedalschicht zu fixieren. Durch die Anordnung von druckempfindlichen Sensoren zwischen diesen beiden Schichten, sind die druckempfindlichen Sensoren besonders vor Verschleiß bzw. auch vollständiger Zerstörung geschützt.

In einer bevorzugten Ausbildung des erfindungsgemäßen Fußpedals zur Betätigung einer Maschine wird der druckempfindliche Sensor von einem druckempfindlichen Widerstandselement gebildet. Solche druckempfindlichen Widerstandselemente werden mittlerweile relativ kostengünstig hergestellt und lassen sich daher in solchen Fußpedalen leicht verarbeiten. Diese druckempfindlichen Widerstandselemente sind üblicherweise robust ausgestaltet. Ihr Signal kann mit einfachen elektrischen Mitteln ausgewertet werden.

Um den Druck auf einem Fußpedal möglichst flächig zu erfassen sind die druckempfindlichen Sensoren in einer besonderen Ausgestaltung der Erfindung folienartig ausgebildet ist. Damit lässt sich grundsätzlich der Druck an vielen Stellen des Fußpedals erfassen.

Anstelle des druckempfindlichen Widerstandselements kann in einer bevorzugten Ausbildung des erfindungsgemäßen Fußpedals zur Betätigung einer Maschine der druckempfindliche Sensor von einem piezoelektrischen Element gebildet sein. Das piezoelektrische Element ist eine kristalline Molekülstruktur, welche unter Druck eine elektrische Spannung liefert. Diese elektrische Spannung kann zur Erfassung eines Fußes auf einem Fußpedal eingesetzt werden.

In einer weiteren vorteilhaften Ausgestaltung des erfindungsgemäßen Fußpedals zur Betätigung einer Maschine enthält der Stellungsgeber einen Magneten am Fußpedal und eine Hall-Sonde, wobei der Magnet durch Betätigung des Fußpedals auf die Hallsonde zur Erfassung der Stellung des Fußpedals wirkt. Ein solcher Stellungsgeber ist sehr schmutzunempfindlich, da die magnetischen Felder üblichen Schmutz durchdringen können. Dadurch kann die Auslenkung des Fußpedals optimal erfasst werden.

Als Alternative zu der Hall-Sonde ist auch ein Potentiometer in geeigneter Weise verwendbar. Das elektrische Potentiometer liefert eine der Auslenkung des Fußpedals entsprechende elektrische Spannung. Daher ist in einer Ausgestaltung der Erfindung der Stellungsgeber als Potentiometer ausgebildet, welcher mit der Schwenkachse des Fußpedals zur Erfassung der Stellung des Fußpedals gekoppelt ist. Das Potentiometer erzeugt auf einfache Weise ein elektrisches Signal, welches der Auslegung des Fußpedals entspricht. Potentiometer sind Massenwaren, wodurch sich diese Variante kostengünstig realisieren lässt.

Ein weiterer Aspekt der Erfindung ergibt sich ferner dadurch, dass das Fußpedal in einem, Kranwagen, Bau- oder landwirtschaftlichen Nutzfahrzeug vorgesehen ist. In der Baubranche und in der Landwirtschaft besteht die Möglichkeit der Verschmutzung durch große Lehmklumpen oder vergleichbaren Dreck, vor allem des Schuhwerks. Wie bereits zuvor beschrieben sind diese Anwendungsgebiete daher stark davon betroffen, dass die Fußpedale versehentlich bedient werden, obwohl überhaupt kein Fuß auf dem Pedal aufliegt. Die vorliegende Erfindung hilft insofern bei diesen Maschinen, sie sicherer zu machen.

Weitere Ausgestaltungen und Vorteile ergeben sich aus dem Gegenstand der Unteransprüche, sowie den Zeichnungen mit den dazugehörigen Beschreibungen. Ein Ausführungsbeispiel ist nachstehend unter Bezugnahme auf die beigefügten Zeichnungen näher erläutert.

### Kurze Beschreibung der Zeichnung

- Fig. 1: zeigt in einer perspektivischen Prinzipskizze von der Vorderseite ein erfindungsgemäßes Fußpedal für eine Maschine.
- Fig. 2: zeigt die Rückseite des erfindungsgemäßen Fußpedals gemäß Fig. 1 für eine Maschine.
- Fig. 3: zeigt in einer Seitenansicht das erfindungsgemäße Fußpedal für eine Maschine.
- Fig. 4: zeigt in einer perspektivischen Prinzipskizze die Rückseite des erfindungsgemäßen Fußpedals.

### Bevorzugtes Ausführungsbeispiel

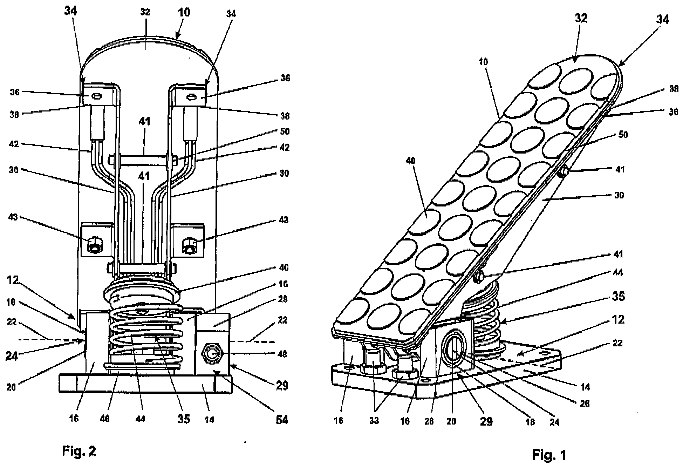

In Fig. 1 wird in einer perspektivischen Prinzipskizze ein erfindungsgemäßes Fußpedal 10 abgebildet. Das Fußpedal 10 ist in einer Montagevorrichtung 12 schwenkbar gelagert. Die Montagevorrichtung 12 verfügt eine Montageplatte 14, auf welcher zwei gegenüberliegende, senkrecht angeordnete Halterungen 16 vorgesehen sind. In den Halterungen 16 sind Bohrungen 18 vorgesehen, in denen ein Schwenkzapfen 20 drehbar gelagert ist. Der Schwenkzapfen 20 dient als Schwenkachse 22 für das Fußpedal 10. Das Fußpedal 10 ist so mit dem Schwenkzapfen 20 verbunden, dass beide gemeinsam auslenken.

An einer Stirnfläche 24 des Schwenkzapfens 20 ist ein Magnet 26 vorgesehen, der sich mit dem Schwenkzapfen 20 bei Betätigung des Fußpedals 10 entsprechend dreht. Der Magnet 26 und die Hall-Sonde 28 bilden einen Stellungsgeber 29. Der Stellungsgeber 29 lässt sich auch beispielsweise durch einen Potentiometer, welcher hier nicht dargestellt ist, realisieren. Der im vorliegenden Ausführungsbeispiel als Hall-Sonde 28 ausgebildete Stellungsgeber 29 erzeugt ein der Drehung entsprechendes Steuersignal, indem der Magnet 26 auf die Hall-Sonde 28 bei der Drehung des Fußpedals 10 wirkt. Mit dem Steuersignal wird beispielsweise ein, hier nicht dargestellter, Antrieb angesteuert. Der Antrieb kann beispielsweise je nach Stellung des Fußpedals 10 seine Drehzahl erhöhen oder absenken.

Das Fußpedal 10 enthält zwei längliche Profilbleche 30, die eine Pedalplatte 32 tragen. Die Pedalplatte 32 besteht aus einem Blech. Mit 33 werden Anschlagsbolzen bezeichnet, an welche die Pedalplatte 32 in einer Ausgangsstellung anschlägt. Zwischen der Montageplatte 14 und der Pedalplatte 32 Ist ein Rückstellmechanismus 35 vorgesehen.

Fig. 2 zeigt die Rückseite des erfindungsgemäßen Fußpedals 10 gemäß Fig. 1 für eine Maschine bzw. für einen Antrieb. Soweit die Zeichnungen übereinstimmen, werden auch identische Bezugszeichen verwendet. In dieser Abbildung wird die Technik unterhalb der Pedalplatte 32 in der Montagevorrichtung 12 deutlich. Das Fußpedal 10 enthält mehrere Schichten 34: Die Pedalplatte 32, Trägerbleche 36, druckempfindliche Widerstandselemente 38 und eine Pedalmatte 40, beispielsweise aus Gummi. Die Pedalmatte 40 ist auf der Pedalplatte 32 vorgesehen. Die Profilbleche 30 des Fußpedals 10 sind mit dem Schwenkzapfen 20 fest verbunden. Stege 41 dienen als stabilisierende Distanzhalter zwischen den Profilblechen 30.

An den in etwa senkrecht angeordneten Profilblechen 30 sind die Trägerbleche 36 im rechten Winkel vorgesehen. Auf diesen Trägerblechen 36 liegt die Pedalplatte 32 auf. Zwischen der Pedalplatte 32 und dem Trägerblech 36 sind die druckempfindlichen Widerstandselemente 38 vorgesehen. Die Schichten 34 sind über Schraubverbindungen 43 fest miteinander verbunden. Von den druckempfindlichen Widerstandselementen 38 verlaufen unterhalb der Pedalplatte 32 Kabel 42, um die druckempfindlichen Widerstandselemente 38 mit einer geeigneten elektrischen Spannung zu versorgen. Durch Druck, welcher auf Fußpedal 10 durch einen Fuß beim betätigen ausgeübt wird, ändert sich der elektrische Widerstand der druckempfindlichen Widerstandselemente 38. Dieses Signal der Widerstandsänderung kann erfasst und ausgewertet werden.

Zwischen der Montageplatte 14 und der Pedalplatte 32 ist der Rückstellmechanismus 35 vorgesehen. Eine Druckfeder 44 wird beim Betätigen des Fußpedals 10 zusammengedrückt. Beim Anheben des Fußes vom Fußpedal 10 drückt die Druckfeder 44 mit der Federkraft die Pedalplatte 32 wieder in Richtung einer Ausgangsposition gegen die Anschlagbolzen 33. Wie weit die Pedalplatte 32 zurück gedrückt wird, ist von der entgegengesetzt wirkenden Kraft des Fußes eines Nutzers auf die Pedalplatte 32 abhängig. Die Druckfeder 44 wird mit Vorsprungselementen 46 in ihrer Position zwischen der Montageplatte 14 und der Pedalplatte 32 gehalten.

Die Hall-Sonde 28 ist auf der Montageplatte 14 befestigt und verfügt über eine elektrische Steckverbindung 48, über welche das Signal für die Stellung des Fußpedals 10 ausgegeben wird. Dabei handelt es sich oft beispielsweise um eine handelsübliche Eingangs- und/oder Ausgangsbuchse für elektrische Verbindungen.

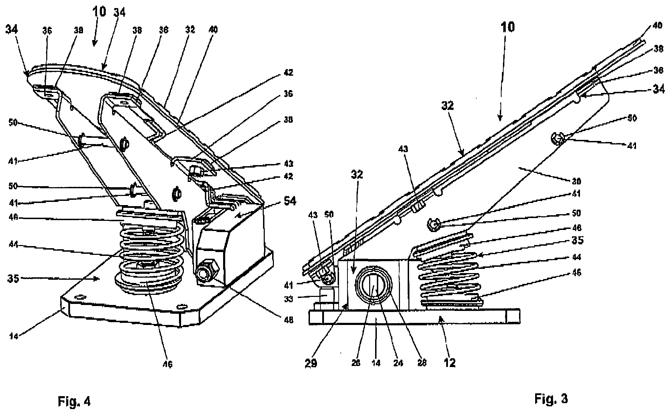

Fig. 3 zeigt in einer Seitenansicht das erfindungsgemäße Fußpedal 10 für eine Maschine. Soweit die Bestandteile dieser Zeichnungen mit den vorherigen Zeichnungen übereinstimmen, werden auch dieselben Bezugszeichen verwendet. In dieser Darstellung ist eines der beiden Profilbleche 30 zu sehen, welche mit den parallelen Stegen 41 miteinander verbunden sind. Bei diesem Anwendungsbeispiel werden drei Stege 41 verwendet, die mit Sprengringen 50 an den Profilblechen 30 befestigt sind. Die Profilbleche 30 verfügen hierzu über geeignete Bohrungen 52. Zwischen der Pedalplatte 32 und den Trägerblechen 36 befinden sich die druckempfindlichen Widerstandselemente 38. Die Trägerbleche 36, wie auch die druckempfindlichen Widerstandselemente, sind im Wesentlichen parallel zu der Pedalplatte 32 angeordnet. Der Magnet 26 ist im Bereich der Stirnfläche 24 des Schwenkzapfens 20 vorgesehen. Durch Betätigen des Fußpedals 10 dreht sich der Schwenkzapfen 20 um die Schwenkachse 22 und nimmt den Magneten 26 bei dieser Rotationsbewegung mit. Das bewegte Magnetfeld des Magneten 24 wirkt dabei auf die Hall-Sonde 28, welche ein entsprechendes elektrisches Signal als Stellungsgeber 29 des Fußpedals 10 erzeugt.

Sobald der Fuß eines Nutzers auf die Pedalplatte 32 des Fußpedals 10 gesetzt wird, ändert sich der elektrische Widerstand der druckempfindlichen Widerstandselemente 38. Diese Widerstandsänderung wird von einem hier nicht dargestellten Messgerät erfasst und ausgewertet. Sobald festgestellt wird, dass der Druck nicht gleichmäßig oder nicht ausreichend ist, wird die Betätigung des Fußpedals elektronisch eingestellt bzw. führt zu einem elektronischen Fehlersignal. So wird vermieden, dass beispielsweise von dem verdreckten Schuh eines Nutzers abgelöste Dreckansammlungen oder Lehmklumpen das Fußpedal 10 ungewollt betätigt, wenn der Fuß bereits vom Fußpedal 10 genommen worden ist. Dies macht das vorliegend beschriebene Fußpedal 10 sicher gegen ungewolltes Betätigen durch Fremdeinwirkung. Dabei ist es unabhängig in welcher Stellung das Fußpedal 10 sich gerade befindet. Ein oder mehrere druckempfindliche Widerstandselemente 38 sind zwischen der Pedalplatte 32 und den Trägerblechen 36 angeordnet. Bei mehreren Widerstandselementen 38 kann - je nach Ausführung des Fußpedals 10 - die Gleichmäßigkeit des Drucks erfasst werden und/oder ein defektes Element 38 erkannt werden (redundante Auswertung). Die druckempfindlichen Widerstandselemente 38 sind dabei flächenmäßig ausgebildet.

Der Rückstellmechanismus 35 wird durch die Druckfeder 44 welche zwischen die Vorsprungselemente 46 geklemmt ist gebildet. Schraubverbindungen fixieren die Pedalplatte 32 an den Trägerblechen 36. Die druckempfindlichen Widerstandselemente 38 sind zwischen der Pedalplatte 32 und den Trägerblechen 36 in geeigneter Weise angeordnet und beispielsweise durch Kleben oder Klemmen fixiert. An Stelle der druckempfindlichen Widerstandselemente können auch andere vergleichbare druckempfindliche Sensoren, wie beispielsweise piezoelektrische Elemente verwendet werden.

In Fig. 4 wird in einer perspektivischen Prinzipskizze die Rückseite des erfindungsgemäßen Fußpedals 10 gezeigt. Soweit auch hier die Zeichnungen mit den vorherigen Abbildungen übereinstimmen werden auch hier dieselben Bezugszeichen verwendet. Die Kabel 42 der druckempfindlichen Widerstandselemente 38 werden zu einem Messwertaufnehmer 54 geführt. Der Messwertaufnehmer 54 erfasst die Signale der druckempfindlichen Widerstandselemente 38 und kann bei einem geeigneten Schwellwert den Stellungsgeber 29 beeinflussen. Wird beispielsweise dieser Schwellwert durch die druckempfindlichen Widerstandselemente 38 nicht erreicht, so liegt kein Fuß auf dem Fußpedal 10 auf. In dem Fall wird der Stellungsgeber 29 kein Signal beispielsweise an den Antrieb einer Maschine geben und deren Drehzahl nicht erhöhen.

Solche Fußpedale 10 wie sie hier beschrieben werden, werden vorzugsweise bei Nutzfahrzeugen oder Maschinen beispielsweise in der Baubranche oder der Landwirtschaft verwendet. Dabei werden die Fußpedale 10 zum Beispiel in Kränen, Baggern, Traktoren, Mähdreschern oder vergleichbaren Maschinen eingesetzt.

Der Schutzumfang der vorliegenden Erfindung soll dabei nicht alleine durch das beschriebene Ausführungsbeispiel festgelegt und beschränkt werden. Der Schutz wird allein durch die Schutzansprüche bestimmt. Die Ausführungsbeispiele dienen nur zur Erläuterung der Schutzansprüche. Dabei wird der Schutzanspruch auch auf Ausführungen bzw. Techniken ausgedehnt die vielleicht jetzt noch nicht vorhanden bzw. bekannt sind aber dem Fachmann zukünftig in Kenntnis dieser hier beschriebenen Technik nahe gelegt werden.
- 10: Fußpedal
- 12: Montagevorrichtung
- 14: Montageplatte
- 16: Halterungen
- 18: Bohrungen
- 20: Schwenkzapfen
- 22: Schwenkachse
- 24: Stirnfläche
- 26: Magnet
- 28: Hall-Sonde
- 29: Stellungsgeber
- 30: Profilbleche
- 32: Pedalplatte
- 33: Anschlagsbolzen
- 34: Schichten
- 35: Rückstellmechanismus
- 36: Trägerbleche
- 38: Widerstandselemente
- 40: Pedalmatte
- 41: Stege
- 42: Kabel
- 43: Schraubverbindungen
- 44: Druckfeder
- 46: Vorsprungselemente
- 48: Steckverbindung
- 50: Sprengringe
- 52: Bohrungen der Profilbleche 30
- 54: Messwertaufnehmer

## Patentansprüche

1. Fußpedal (10) zur Betätigung einer Arbeitsmaschine bzw. eines Nutzfahrzeuges, enthaltend
a) eine Montagevorrichtung (12), in welcher das Fußpedal (10) um eine Schwenkachse (22) schwenkbar vorgesehen ist,
b) einen Rückstellmechanismus (35), welcher das Fußpedal (10) nach Betätigung in eine Ausgangsstellung zurückführt,
c) einen Stellungsgeber (29), welcher die Stellung des Fußpedals (10) erfasst und die Maschine entsprechend der Stellung des Fußpedals (10) ansteuert, und
d) einen druckempfindlichen Sensor (38) zur Erfassung eines Fußes auf dem Fußpedal (10) unabhängig von der jeweiligen Stellung des Fußpedals (10), wobei
e) der druckempfindliche Sensor (38) von einem druckempfindlichen Widerstandselement (38) gebildet wird,
**dadurch gekennzeichnet, dass**
f) der Stellungsgeber (29) einen Magneten (26) am Fußpedal (10) und eine Hall-Sonde (28) enthält, wobei der Magnet (26) durch Betätigung des Fußpedals (10) auf die Hall-Sonde (28) zur Erfassung der Stellung des Fußpedals (10) wirkt, wobei
g) ein Messwertaufnehmer (54) die Signale des druckempfindlichen Sensors (38) erfasst und bei einem geeigneten Schwellwert den Stellungsgeber (29) beeinflusst, indem bei Nichterreichen des Schwellwerts der Stellungsgeber (29) kein Signal an die Maschine gibt.

2. Fußpedal (10) zur Betätigung einer Maschine nach Anspruch 1, **dadurch gekennzeichnet, dass** das Fußpedal (10) eine Trägerschicht (36) und eine Pedalschicht (32) aufweist, zwischen denen der druckempfindliche Sensor (38) angeordnet ist.

3. Fußpedal (10) in einem Kranwagen, Bau- oder landwirtschaftlichen Nutzfahrzeug zur Betätigung einer Maschine nach einem der Ansprüche 1 bis 2, **dadurch gekennzeichnet, dass** druckempfindliche Sensor (38) folienartig ausgebildet ist.

4. Fußpedal (10) zur Betätigung einer Maschine nach einem der Ansprüche 1 bis 3, **dadurch gekennzeichnet, dass der** druckempfindliche Sensor (38) von einem piezoelektrischem Element gebildet wird.

5. Fußpedal (10) zur Betätigung einer Maschine nach einem der Ansprüche 1 bis 4, **dadurch gekennzeichnet, dass** mehrere druckempfindliche Sensoren (38) an dem Fußpedal (10), an unterschiedlichen Stellen des Fußpedals (10) verteilt sind.

6. Fußpedal (10) zur Betätigung einer Maschine nach einem der Ansprüche 1 bis 5, **dadurch gekennzeichnet, dass** das Fußpedal (10) in einem Kranwagen, Bau- oder landwirtschaftlichen Nutzfahrzeug vorgesehen ist.

## Claims

1. A foot pedal (10) for the activation of a work machine or a commercial vehicle, containing
a) a mounting device (12), which is provided to enable the foot pedal (10) to pivot around a swivel axis (22),
b) a returning mechanism (35), which returns the foot pedal (10) to its initial position after activation,
c) a position transmitter (29), which detects the position of the foot pedal (10) and controls the machine according to the position of the foot pedal (10), and
d) a pressure-sensitive sensor (38) to detect if a foot is on the foot pedal (10) independent of the particular position of the foot pedal (10), wherein
e) the pressure-sensitive sensor (38) is formed by a pressure-sensitive resistive element (38),
**characterized in that**
f) the position transmitter (29) comprises a magnet (26) on the foot pedal (10) and a Hall sensor (23), whereby the magnet (26) influences the Hall sensor (28) through activation of the foot pedal (10) to detect the position of the foot pedal (10), whereby
g) a measurement transducer (54) detects the signals of the pressure-sensitive sensor (38) and influences the position transmitter (29) at a suitable threshold value **in that** if the threshold value of the position transmitter (29) is not reached, the measurement transducer (54) does not send a signal to the machine.

2. Foot pedal (10) for activating a machine according to Claim 1, **characterized in that** the foot pedal (10) comprises a base layer (36) and a pedal layer (32) between which the pressure-sensitive sensor (38) is arranged.

3. Foot pedal (10) in a crane truck, construction vehicle, or agricultural vehicle for activating a machine according to one of Claims 1 to 2, **characterized in that** the pressure-sensitive sensor (38) is formed like a foil.

4. Foot pedal (10) for activating a machine according to one of Claims 1 to 3, **characterized in that** the pressure-sensitive sensor (38) is formed by a piezoelectric element.

5. Foot pedal (10) for activating a machine according to one of Claims 1 to 4, **characterized in that** several pressure-sensitive sensors (38) are arranged on the foot pedal (10) at different locations on the foot pedal (10).

6. Foot pedal (10) for activating a machine according to one of Claims 1 to 5, **characterized in that** the foot pedal (10) is provided in a crane truck, construction vehicle, or agricultural vehicle.

## Revendications

1. Pédale à pied (10) destinée à actionner soit une machine de travail soit un véhicule utilitaire, comprenant :
(a) un dispositif de montage (12) dans lequel la pédale à pied (10) est prévue en pouvant pivoter autour d'un axe de pivotement (22),
(b) un mécanisme de rappel (35) qui ramène, après actionnement, la pédale à pied (10) en position de départ,
(c) un transmetteur de position (29) qui saisit la position de la pédale à pied (10) et commande le démarrage de la machine en fonction de la position de la pédale à pied (10), et,
(d) un capteur (38) sensible à la pression destiné à saisir un pied posé sur la pédale à pied (10) indépendamment de la position respective de la pédale à pied (10),
(e) le capteur (38) sensible à la pression étant formé d'un élément de résistance (38) sensible à la pression,
**caractérisée en ce que**
(f) le transmetteur de position (29) comprend un aimant (26) situé sur la pédale à pied (10) et une sonde de Hall (28), l'aimant (26) agissant sur la sonde de Hall (28) en actionnant la pédale à pied (10) afin de saisir la position de la pédale à pied (10),
(g) un capteur de valeur de mesure (54) saisissant les signaux du capteur (38) sensible à la pression et influençant le transmetteur de position (29) en présence d'une valeur de seuil appropriée en n'envoyant aucun signal à la machine lorsque la valeur de seuil du transmetteur de position (29) n'est pas atteinte.

2. Pédale à pied (10) destinée à actionner une machine selon la revendication 1, **caractérisée en ce que** la pédale à pied (10) présente une couche porteuse (36) et une couche de pédale (32) entre lesquelles est disposé le capteur (38) sensible à la pression.

3. Pédale à pied (10) située dans un camion-grue, un véhicule utilitaire de chantier ou un véhicule utilitaire agricole et destinée à actionner une machine selon l'une quelconque des revendications 1 à 2, **caractérisée en ce que** le capteur (38) sensible à la pression est configuré sous forme de film.

4. Pédale à pied (10) destinée à actionner une machine selon l'une quelconque des revendications 1 à 3, **caractérisée en ce que** le capteur (38) sensible à la pression est formé d'un élément piézoélectrique.

5. Pédale à pied (10) destinée à actionner une machine selon l'une quelconque des revendications 1 à 4, **caractérisée en ce que** plusieurs capteurs (38) sensibles à la pression sont répartis sur la pédale à pied (10) à différents endroits de la pédale à pied (10).

6. Pédale à pied (10) destinée à actionner une machine selon l'une quelconque des revendications 1 à 5, **caractérisée en ce que** la pédale à pied (10) est prévue dans un camion-grue, un véhicule utilitaire de chantier ou un véhicule utilitaire agricole.
